# EUROPEAN PATENT SPECIFICATION

(11) **EP 1 486 405 B1**
(45) Date of publication and mention of the grant of the patent: **11.06.2008**
(21) Application number: 03710351.2
(22) Date of filing: 13.03.2003
(51) Int. Cl.: B62D 55/253

(54) **RUBBER CRAWLER AND CRAWLER TRAVELING EQUIPMENT**
GUMMIRAUPENKETTE UND RAUPENKETTENFAHREINRICHTUNG
CHENILLE EN CAOUTCHOUC ET ENGIN A CHENILLES EN CAOUTCHOUC

(30) Priority: 15.03.2002 JP 2002072007
(43) Date of publication of application: 15.12.2004
(73) Proprietor: Fukuyama Gomu Kogyo Kabushiki Kaisha, Fukuyama-shi, Hiroshima-ken 720-0802 (JP)
(72) Inventor: KATOH, Yusaku, Fukuyama-shi, Hiroshima 720-0092 (JP); NORITOH, Tatsuya, Ibara-shi, Okayama 715-0019 (JP); KIMURA, Hideki, Fukuyama-shi, Hiroshima 720-2413 (JP)
(74) Representative: Kramer - Barske - Schmidtchen
(86) International application number: PCT/JP2003/003039
(87) International publication number: WO 2003/078239

(56) References cited:
- EP-A- 0 304 390
- JP-A- 8 258 757
- JP-A- 11 171 062
- JP-B2- 3 132 874
- JP-B2- 3 318 733
- JP-B2- 4 062 912
- JP-U- 2 121 493
- JP-U- 55 002 757
- JP-U- 55 102 683
- PATENT ABSTRACTS OF JAPAN vol. 1995, no. 02, 31 March 1995 (1995-03-31) & JP 06 305460 A (BRIDGESTONE CORP), 1 November 1994 (1994-11-01)
- PATENT ABSTRACTS OF JAPAN vol. 1997, no. 02, 28 February 1997 (1997-02-28) & JP 08 258757 A (KAJIMA CORP; KOKEN BORING MACH CO LTD), 8 October 1996 (1996-10-08)
- PATENT ABSTRACTS OF JAPAN vol. 1999, no. 04, 30 April 1999 (1999-04-30) & JP 11 011361 A (MITSUBISHI AGRICULT MACH CO LTD), 19 January 1999 (1999-01-19)

## Description

### TECHNICAL FIELD

The present invention relates to a rubber crawler and a crawler traveling equipment, which are installed on tires of industrial vehicles represented by construction machines, civil work machines, agricultural cars, carrier, snow removing cars and cargo vehicles such as a fork lift truck.

### PRIOR ART

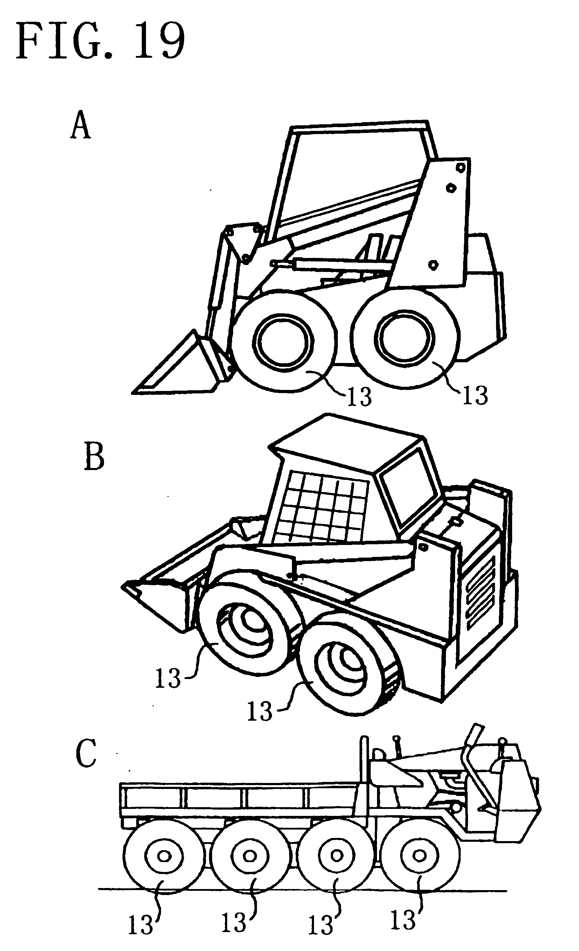

Skid steering industrial vehicles according to a tire specification are described in Japanese Patent publication No. 30588 of 1985 (Fig. 19A), Japanese Patent Publication No. 5400 of 1996, Japanese Utility Model Laid-open Publication No. 91387 of 1980 (Fig. 19C), Japanese Utility Model Laid-open Publication No. 125066 of 1990 and Japanese Utility Model Publication No. 24439 of 1995 (Fig. 19B). There are, for example, skid steering loaders shown in Fig. 19A and Fig. 19B and a multiwheeled traveling car shown in Fig. 19C. In these figures, 13 is a tire.

Besides, a crawler traveling equipment for an agricultural car such as a combine or a harvester is disclosed in Japanese Patent Laid-open Publication No. 011361 of 1999, and a crawler traveling equipment for a construction vehicle is disclosed in Japanese Utility Model No. 2523571, as a conventional crawler traveling equipment.

The conventional crawler traveling equipment is so constructed that a crawler is suspendedly installed on a coupled driving wheel (an idler) and a driving wheel (a sprocket), and as to be guided by a plurality of carrying wheels whose tread sides are axially supported by a truck frame.

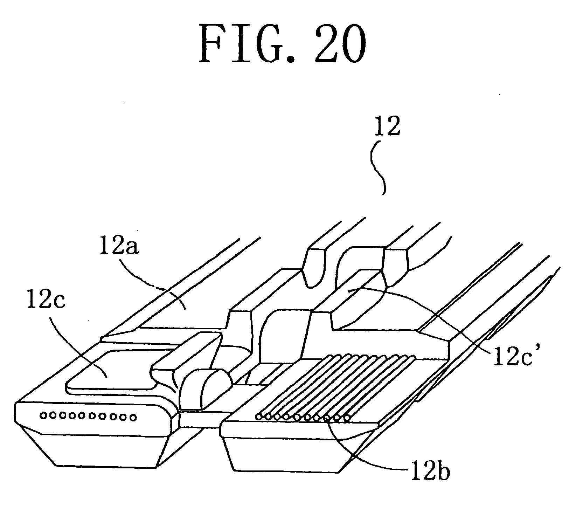

A conventional rubber crawler for being suspendedly wound and used to the conventional crawler traveling equipment is shown in Fig. 20. As shown in the figure, the conventional rubber crawler 12 comprises a rubber crawler main body formed of an endless rubber belt 12a made of rubber elastic body and so on, a tensile strength layer 12b and metallic core members 12c embedded in the rubber belt. The tensile strength layer 12b comprises tensile strength body rows each arranging a plurality of steel cords along a circumferential direction within a cross direction of the rubber crawler. The core members 12c are embedded inside the tensile strength layer 12b at a fixed interval. And guide protrusions 12c' for preventing the crawler from departing from the traveling equipment are protrudently formed to the inside circumference of the crawler.

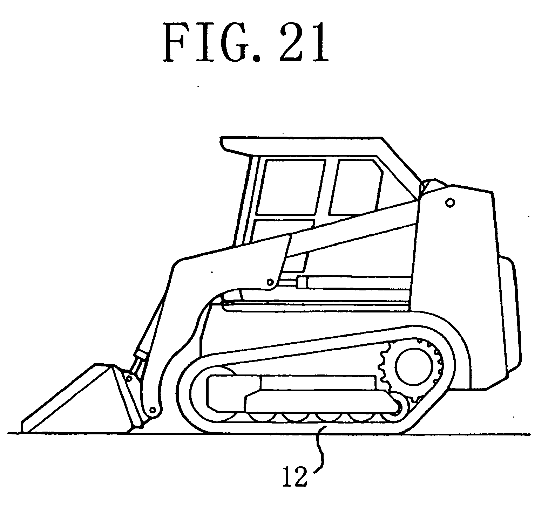

Although many traveling equipments with tires 13 are used as the conventional skid steering industrial vehicle, they have a trouble not to be used in poor ground because the tires 13 sink therein. In thus case, a traveling equipment according to a crawler specification whose rubber crawler 12 has high trafficability under low ground pressure even on damp ground or poor ground is used. The rubber crawler 12 is shown in Fig. 21.

However, since the conventional traveling equipments according to a crawler specification are for crawlers only, they must be manufactured separately from traveling equipments according to a tire specification. Therefore, the cost comes to be expensive.

Besides, since a crawler can not be installed to the skid steering industrial vehicle according to a tire specification during use, a new skid steering industrial vehicle according to a crawler specification must be prepared.

In a crawler traveling equipment wherein a rubber crawler is suspendedly wound to coupled driving wheels and driving wheels as well as a plurality of carrying wheels axially supporting the traveling tread to the truck frame guide and travel, metallic core members are embedded in the rubber crawler at a fixed interval to keep rigidity thereof. Therefore, the weight of the rubber crawler comes to be heavy, and besides, the crawler can not travel in high speed.

From document EP 0 304 390 A2 a traction device with a rubber track is known which comprises a rubber crawler having core members made of metallic material embedded therein. Tensile reinforcing members, such as steel cords, are embedded in the crawler shoe in such a manner so as to surround the outer circumferences of the cores. This document forms the preamble of claim 1.

The present invention aims to solve the above-mentioned problems. The main object is to provide a rubber crawler and a rubber crawler equipment, which are capable of traveling in high speed and besides, favourable as to drainage.

A further aim of the present invention is to provide traveling equipments capable commonizing equipments according to a tire specification and traveling equipments according to a crawler specification to solve a problem of cost-up caused by separately manufacturing them.

In this case, there occurs a new problem due to commonizing the traveling equipments according to a tire specification and the traveling equipments according to a crawler specification. That is, the problem occurs because a device for adjusting crawler extension, which helps a crawler of the conventional crawler traveling equipment to be suspendedly installed to idlers (coupled driving wheels) and sprockets (driving wheels) and adjusts the extension thereof, is not provided to the traveling equipments according to a tire specification. Therefore, the present invention also aims to provide skid steering traveling equipments capable of commonizing both tires and crawlers.

### SUMMARY OF INVENTION

The first means of the invention to accomplish the above-mentioned aims consists in a rubber crawler comprising the features of claim 1. According to this, a rubber crawler can reduce the weight and travel in high speed as keeping the rigidity and avoid clogging.

The second means of the invention consists in a traveling equipment capable of driving the rubber crawler comfortably, and besides commonizing the tires and the crawler due to installing a crawler to the tires of traveling equipments according to a tire specification suspendedly.

The following construction is made to solve inconveniences due to no devices for adjusting crawler extension in a traveling equipment according to a tire specification, which are new problems caused by suspendedly installing a crawler to a traveling equipment according to a tire specification, namely, a problem that installing a crawler to tires is difficult and a problem that the extension of the crawler can not be adjusted.

In the traveling equipments according to a tire specification that each traveling equipment arranged to left and right sides of a vehicle comprises more than at least two wheels, at least one or the other of front and rear tires of both ends of the longitudinal direction of the vehicle are formed in hollow tire. The outside diameter dimensions of the tires are enlarged and reduced by injection and ejection of air or liquid to its hollow parts, thereby installing and disconnecting the crawler easily. Besides, the traveling equipments are made in a skid steering type for adjusting the extension of the crawler by regulating the internal pressure of the hollow tire. For example, although a conventional air tire eliminated a carcass therefrom is used as the above-mentioned hollow tire, this is not limited to it.

The rubber crawler comprises a rubber crawler composed of an endless rubber belt made of rubber elastic material and resin material, a tensile strength layer embedded therein and guide protrusions for preventing the crawler from getting out of the tires (wheels) of the traveling equipment. The tensile strength layer comprises a plurality of tensile strength bodies arranged and paralleled in rows within the cross direction of the crawler along the circumferential direction thereof. The guide protrusions are protrusively formed on the inside circumference of the crawler at a fixed interval.

Preferred embodiments are defined by the dependent claims.

It is preferable that core members are embedded in the rubber belt at a fixed interval to increase the rigidity of the crawler.

The present invention is preferably characterized in that the core members are formed of thermoplastics such as polyethylene and vinyl chloride, thermosetting plastics, urethane resins, blend material or bridging material composed of these plastics and rubber, or high hardness rubber.

In this case, strength bodies such as steel cords and strength fibers may be embedded in the core members to reinforce them.

Therefore, the weight of such a core member is lightened rather than the conventional metallic core member, thereby lightening rubber crawler's self as well as enabling the rubber crawler to travel in high-speed. Besides, since the core members are formed of plastic material and so on, they can be integrally and fusedly adhered to the rubber elastic material and the resin material of the rubber belt forming the rubber crawler body.

It is preferable that the core members are embedded in the guide protrusions of the rubber crawler, too. In this case, the core members increase the strength of the guide protrusions.

When the core members are embedded in the rubber crawler, a part of them may be embedded so as to expose to the inside circumference of the rubber crawler. Therefore, the rubber of the inside circumference can be prevented from wearing due to friction with the tires.

Although it is preferable that the traveling equipment of the present invention uses the rubber crawler that the core members formed of plastic material are embedded therein, it doesn't necessarily need the rubber crawler including the core members. Besides, core members formed of high hardness rubber or metal such as iron can be used.

It is preferable that the guide protrusions are protrusively formed on the both ends of the cross direction of the rubber crawler in an angular U letter shape at a fixed interval along the circumferential direction so as to sandwich the both sides of the cross direction of the tire. They are in a shape that the crawler doesn't get out of the tires.

Although steel codes are generally used as tensile strength bodies of the rubber crawler, fiber or cloth formed of vinylon, nylon, tetron, vectran and kevler may be used, and the others may be used. In this case, the tensile strength bodies can be embedded in the rubber belt in one, two or a plurality of the tensile strength layers. In case of a plurality of layers, a material of each tensile strength layer may be same or different, and its form may be made in linear, cloth or bias. When the core members or the metallic core members are embedded in the rubber belt, the tensile strength layers may be provided to both of the inside circumference and the outside circumference of the core members, or provided to either of them.

As a material of the rubber belt, can be used natural rubber, synthetic rubber (SBR, BR, IR, Urethane and so on), blend rubber formed of some of these, or blend rubber formed of these and high molecular resin such as high styrene resin including reinforcer such as carbon black, filler, antioxidant, vulcanization accelerator, and curing agent. These addition agents are suitably selected and blended in view of working condition of the rubber crawler the durability and cost and so on. Besides, the rubber belt may be mainly composed of the plastic resin such as polyethylene and polyvinyl chloride, and polyurethane resin.

Besides, the endless rubber belt of the present invention is not limited to these.

The skid steering traveling equipment of the present invention is so constructed that each of the traveling equipments arranged to both ends of the vehicle is made in a tire traveling equipment comprising at least more than two tires and a rubber crawler is suspendedly installed on the tires of both of the front and rear ends thereof.

According to this, a traveling equipment can serve as a traveling equipment according to a tire specification and a traveling equipment according to a crawler specification, thereby reducing the cost. When the industrial vehicle must travel on damp ground, soft ground and snow, it is provided with rubber crawlers to travel with the crawlers. On a place unnecessary for rubber crawlers, the industrial vehicle has the rubber crawlers taken off to travel with the tires. It is possible to select the tires or the crawlers suitably in accordance with the traveling place.

Besides, at least one or the other of front and rear tires of both ends of the longitudinal direction of the traveling equipment suspendedly with the crawler are formed in hollow tire. The hollow tire can be enlarged and reduced its outside diameter dimension by injection and ejection of air.

According to this, a crawler can be easily installed on the tires, and some troubles due to no mechanism for adjusting the extension thereof in the conventional traveling equipment according to a tire specification can be solved. That is, when the outside diameters of the tires are reduced by ejecting the air thereinside to have the crawler suspendedly installed thereon and thereafter, are enlarged by injecting the air to be in the original dimension, it is easy to install and remove the crawler smoothly. Besides, injecting the air in the hollow tire and enlarging the outside diameter thereof can solve the crawler looseness caused by friction of the inside circumferences of the crawler and the tires in traveling.

Besides, it is preferable that a pressure-reducing device forcedly ejects the air from the hollow tire. Instead of the air, liquid such as grease may be injected and ejected to enlarge and reduce the outside diameter of the tires.

The other side tires of the traveling equipment may be made in driving wheels using usual air tires, solid tires, solid tires perforated on the side surfaces or metal wheels.

In this case, it is preferable that the side surfaces of the tires are provided with hard covers made of metal or plastic and sideboards made of metal or hard plastic. According to this, the crawler's derailment is prevented effectively, and the side surfaces of the tires are prevented from damage due to friction with the guide protrusions. Besides, the rubber crawler can be provided with protrusions on the sideboards to drive the rubber crawler.

Next, the traveling equipment of the present invention can drive the rubber crawler due to engaging the guide protrusions to engaging holes provided on the tires and transmitting driving force to the crawler through the tires. Besides, there is a method for transmitting the driving force through the friction between the tires and the crawler. Moreover, there is a method for transmitting the driving force through an engagement of sprocket teeth provided to the tires to the engaging holes. Furthermore, the rubber crawler may be driven by a timing belt method for engaging gear driving protrusions provided on the outside surfaces of driving tires with small driving protrusions provided between the guide protrusions of the inside circumference thereof. Besides, the driving due to the friction between the tires and the crawler may be used together with the driving due to the engagement of the guide protrusions of the crawler with the engaging holes of the tires or the engagement of the engaging holes of the crawler with the sprocket teeth. Besides, the present invention is limited to these.

When the friction between the tires and the crawler transmits the driving force, it is preferable that small slots or small protrusions are provided to the outside circumferences of the tires or the inside circumferences of the crawlers to increase the friction as well as to prevent slipping. The small protrusions may be arranged horizontally in the cross direction and may be formed in V letter shape. Besides, they may be provided to the total width of the cross direction or divided into the plural such as two or three in the cross direction. In case they are divided into the plural, they may be arranged on the same position in left and right and may be in staggered arrangement.

The inside circumference of the rubber crawler has the central part of the cross direction made high and the edges thereof made low. According to this, mud drainage is well, thereby preventing mud from gathering between the crawler and the tires, preventing the crawler from getting out of the tires, and preventing the crawler from breaking because of abnormal tension owing to clogging mud. Besides, when the crawler is shifting from the tires, the above-mentioned shape puts back the crawler to the center to amend its side drift, thereby preventing the crawler from getting out.

### BRIEF DESCRIPTION OF THE DRAWINGS

Fig. 1 is a side view of a crawler traveling equipment, and Fig. 2 is a section view taken on line X-X of Fig. 1.
Fig. 3A is a plane view of the inside circumference (anti-tread) of a rubber crawler, and Fig. 3B is a section view taken on line X-X of Fig. 3A.
Fig. 4 is a section view of a cross direction showing relation between a rubber crawler and a hollow tire of a coupled driving wheel for enlarging and reducing the outside diameter, wehrein not all features of the invention are shown in Fig. 4.
Fig. 5 is a side view for explaining a method that a rubber crawler is installed on tires of a traveling equipment.
Figs. 6 are section views of a cross direction showing different embodiments of the shapes of guide protrusions of rubber crawler, not showing all features of the invention.
Fig. 7 is a section view of a cross direction showing driving transfer relation between a rubber crawler and a solid tire of driving wheel, not showing all features of the invention.
Figs. 8 are views showing different embodiments of a method for driving traveling equipments.
Figs. 9 are views showing different embodiments of a method for driving traveling equipments.
Figs. 10 are plane views showing different embodiments of the inside circumferences of rubber crawlers having small protrusions.
Fig. 11 is a section view of a cross direction showing an embodiment wherein a rubber crawler has the center part of the inside circumference made high and the edges thereof made low.
Fig. 12A is a plane view of the inside circumference of a rubber crawler showing an embodiment wherein core members are embedded in the inside circumference of a rubber crawler so that a part of them may protrude. Fig. 12B is a section view taken on line X-X of Fig. 12A, and Fig. 12C is a section view taken on line Y-Y of Fig. 12A, not showing all features of the invention.
Fig. 13 is a section view of a cross direction showing another embodiment of a rubber crawler wherein core members are embedded in the inside circumference of a rubber crawler, not showing all features of the invention.
Fig. 14 is a perspective view with parts partially broken away showing another embodiment of core members embedded in a rubber crawler.
Figs. 15 are side views showing different embodiments of traveling equipments with a rubber crawler of the present invention.
Fig. 16 is a section view of a cross section of an embodiment wherein core members are embedded in a rubber crawler, not showing all features of the invention.
Fig. 17A is a section view of a side surface of a bearing device that is installed and used between an axle and a wheel of a crawler traveling equipment, and Fig. 17B is a front view thereof.
Fig. 18 is a section view of the state that a coupled driving wheel is installed on an axle of a traveling equipment.
Fig. 19A is a side view of a conventional skid steering loader according to a tire specification, Fig. 19B is a perspective view thereof, and Fig. 19C is a side view of a conventional multiwheeled traveling vehicle.
Fig. 20 is a perspective view with parts partially broken away of a conventional rubber crawler.
Fig. 21 is a side view of a conventional skid steering loader according to a tire specification.

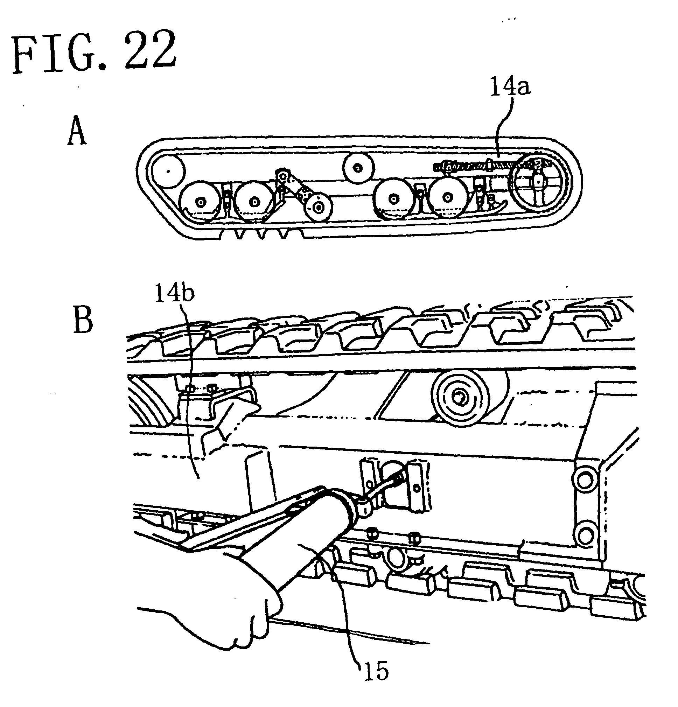

Fig. 22A is a side view of a crawler traveling equipment with a conventional screw device for adjusting crawler extension, and Fig. 22B is an explanation view showing an injection part for grease of a crawler traveling equipment with a grease up device for adjusting crawler extension.

### PREFERRED EMBODIMENT OF THE INVENTION

Embodiments of the present invention are explained according to drawings as follows.

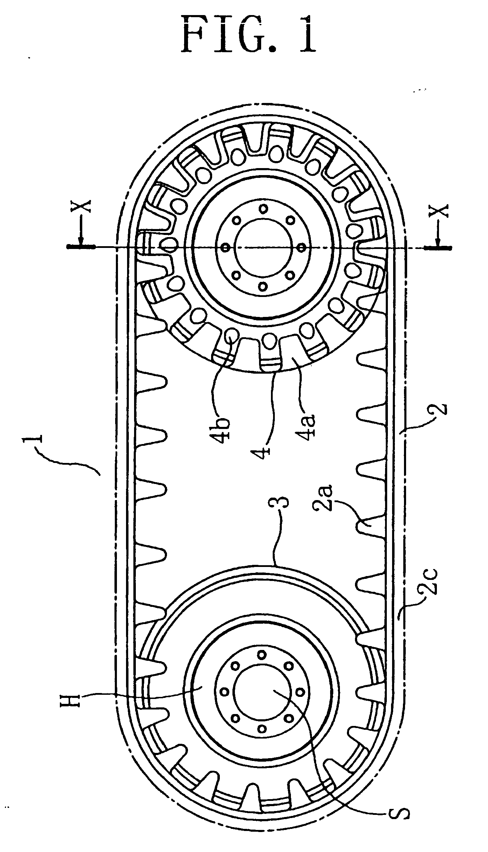

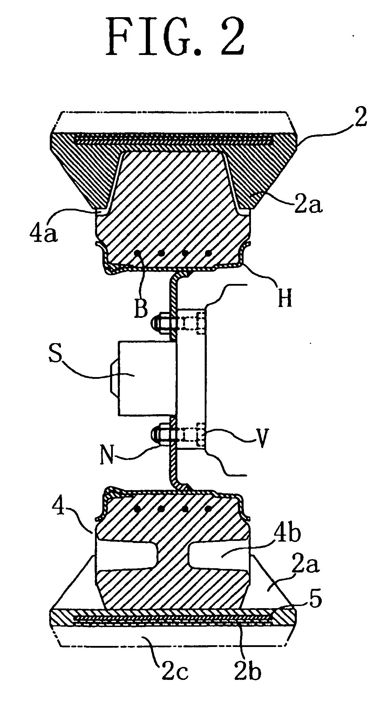

Fig. 1 is a side view of a rubber crawler traveling equipment related to the present invention, and Fig. 2 is a section view taken on line X-X of Fig. 1.

Figs. 1, 2 show a traveling equipment 1 in the first embodiment of the present invention, which is a skid steering traveling equipment 1 having a rubber crawler 2 installed on tires 3, 4. In this embodiment, the rubber crawler 2 is suspendedly-installed between a coupled driving wheel 3 comprising a hollow tire for enlarging and reducing the outside diameter dimension and a driving wheel 4 comprising a perforated solid tire.

The perforated solid tire is provided with an engaging hole 4a for transmitting driving force from the traveling equipment due to engaging with guide protrusions 2a of the rubber crawler 2. Side holes 4b are formed to each side surface of the driving tire 4 to keep cushion property.

The traveling equipment is so constructed as to transmit the driving force from an axle S to the rubber crawler 2 due to using a method for transmitting driving force through friction between the driving tire 4 and the inside circumference of the rubber crawler 2 together a method for transmitting driving force through engagement of the guide protrusions 2a and the engaging holes 4a.

In drawings, H is a wheel for fitting the tire on the axle S, V and N are a volt and a nut for fitting the wheel to the axle, respectively, and B is a bead wire.

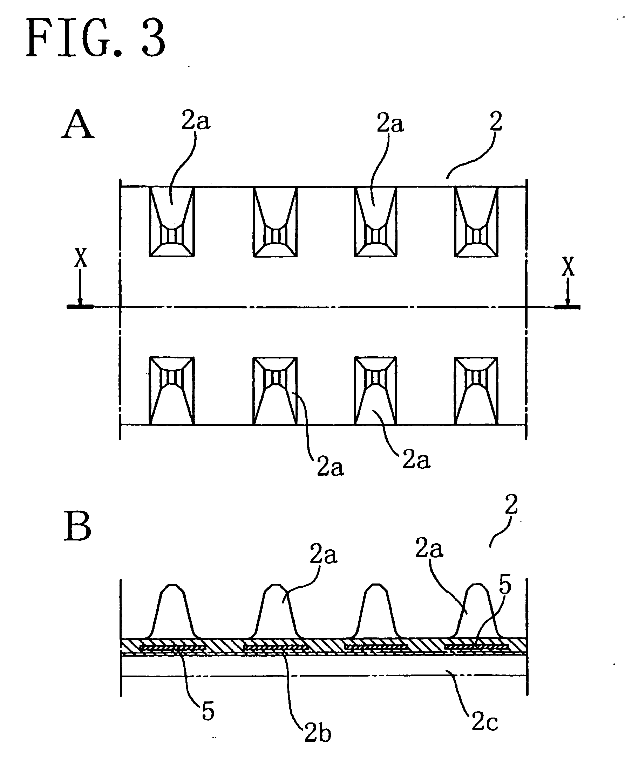

Figs. 3 show the rubber crawler 2 of the first embodiment, Fig. 3A is a plane view of the inside circumference of the rubber crawler, and Fig. 3B is a section view taken on line X-X of Fig. 3A.

The rubber crawler 2 has a tensile strength layer 2b embedded in an endless belt made of rubber elastic body along the circumferential direction. The tensile strength layer 2b is so formed as to parallel and arrange a plurality of steel cords in a row within a cross direction of the rubber crawler. Besides, flat core members 5 made of vinyl chloride resin of thermoplastic resin are embedded in the inside circumference of the tensile strength layer 2b at a fixed interval to reinforce the rigidity of the rubber crawler. The guide protrusions 2a are protrusively formed to the inside circumference of the rubber crawler 2 at a fixed interval

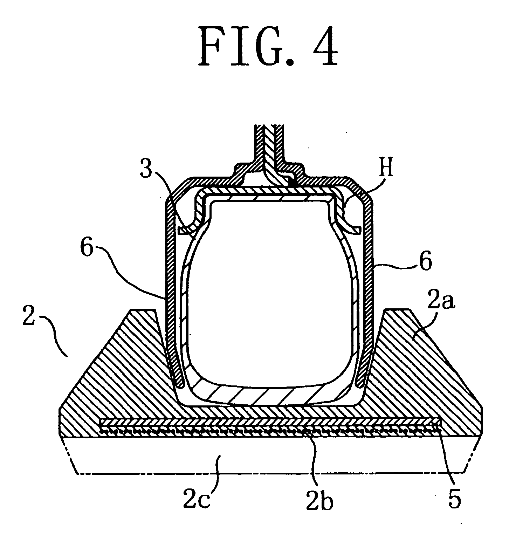

Fig. 4, which does not show all features of the rubber crawler 2 of the invention, shows a section view of the hollow tire 3 for enlarging and reducing the outside diameter dimension, and sideboards 6 are provided to both side surfaces thereof. According to this, the tire can be prevented from damage caused by direct contact between the guide protrusions 2a and the side surfaces thereof. Besides, the sideboards 6 prevent the crawler from getting out caused by aground on the guide protrusions of the tire when the rubber crawler 2 laterally shifts.

In this embodiment, the sideboards 6 are fitted on the side of the wheel H together the axle S so as to be attached and detached individually. Besides, a sideboard may be formed so as to apply plastic on the side surface of the tire directly.

In Figs. 1 to 4, 2c is a lug rubber provided on the tread of the rubber crawler, and its shape is not illustrated clearly. The shape of the lug rubber is suitably selected in accordance with a place and a purpose which the rubber crawler is used. For example, a parallel pattern, a staggered pattern, a continuous pattern or a triangular pattern is used well since old times.

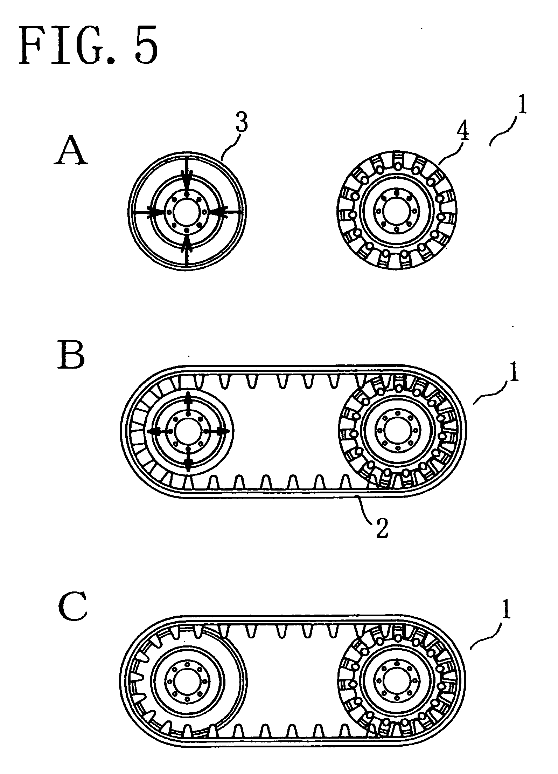

A method that the rubber crawler 2 of the first embodiment is installed on the tires 3, 4 of the traveling equipment 1 is explained with reference to Figs. 5 as follows.

First of all, air is ejected from the hollow tire 3 to reduce the outside diameter dimension (Fig. 5A).

The rubber crawler 2 is suspended on the tire 3 (Fig. 5B).

Then, air is fed into the hollow tire 3 again to enlarge the outside diameter dimension, and the crawler is installed on the traveling equipment (Fig. 5C).

In this case, when the crawler loosens, the extension thereof is adjusted by further injecting air into the hollow tire 3.

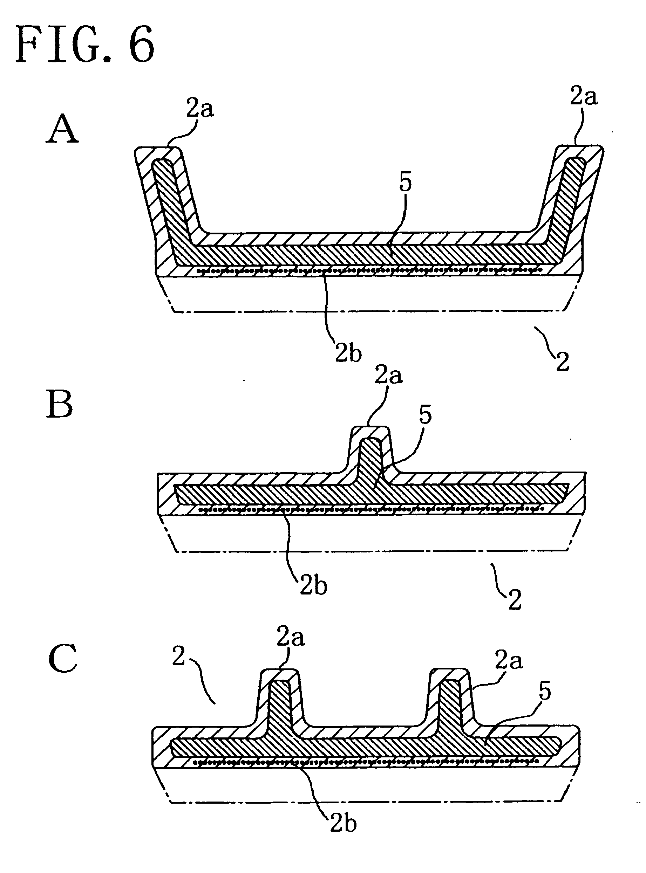

Figs. 6 respectively show different embodiments in the shapes of a rubber crawler 2a with guide protrusions 2a, which do not show all features of the invention.

Fig. 6A is a section view of an embodiment wherein a core member 5 is embedded inside the guide protrusions 2a. Fig. 6B/is a section view of an embodiment wherein the guide protrusion 2a is provided to the center. Fig. 6C is a section view of an embodiment wherein the guide protrusions 2a are provided to the center nearer than both ends of the cross direction of the rubber crawler.

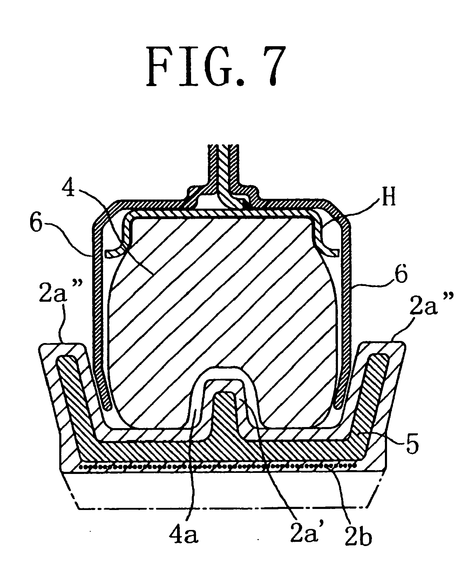

Fig. 7 is a section view showing an embodiment, which does not comprise all features of the invention, wherein a guide protrusion (2a') is provided to the center of the crawler and guide protrusions (2a") are provided to both ends of the cross direction thereof. In this embodiment, the guide protrusions 2a" act so as to prevent the rubber crawler from getting out, and the guide protrusion 2a' is used to transmit the driving force of the rubber crawler 2. That is, the guide protrusion 2a' is engaged to the engaging hole 4a provided to the center of the solid tire 4 of driving wheel to transmit the driving force to the crawler.

The rubber crawler of this embodiment may be formed in a double tire with two tires on the axle wherein the tires are arranged between the guide protrusions thereof.

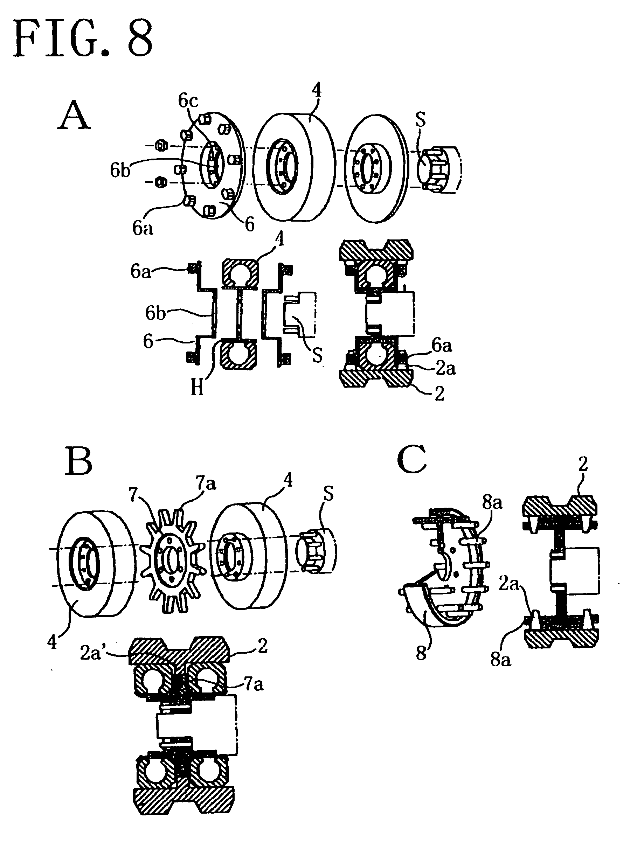

Figs. 8 respectively show different embodiments of a method for transmitting driving force to a traveling equipment.

Figs. 8A are a perspective view and a section view each showing an arrangement which sideboards 6 are fitted on a tire 4 and an axle S. In this embodiment, driving protrusions Ga are arranged on the fringe of one side of a disk main body of a sideboard 6 at a fixed interval. An inner hole Gb and volt holes 6c each for fitting protruding parts of the axle S are provided to the center of the sideboard 6. The sideboard 6 forms in a concave shape as shown in the figures so as to be closely inserted in the wheel H of the tire 4, wherein the circumference of the volt holes 6c and the inner hole Gb becomes hollow. The sideboards G are provided to both sides of the tire 4, as shown in the figures. That is, the protruding part of the axle S is inserted in the inner holes of the sideboards 6 and their intermediate tire 4, and axle volts are inserted in the volt holes 6c to be fixedly tightened with nuts.

Figs. 8B show another embodiment, which are a perspective view and a section view showing an arrangement that a driving gear 7 is fitted on the tires 4 and the axle S. In this embodiment, engaging teeth 7a of the driving gear 7 are engaged with central guide protrusions 2a' of the rubber crawler to transmit the driving force to the crawler. Besides, this embodiment adopts the double tire so that the driving gear 7 may be provided between two tires.

Figs. 8C show further another embodiment of the driving form of the present invention, which are a perspective view with parts partially broken away of the rubber crawler and a view showing its fitting state. As shown in the figures, a driving steel wheel (tire) 8 of this embodiment is so constructed that driving protrusions 8a are protruded on the fringes of both surfaces of the metallic disk main body at a fixed interval. The driving force is transmitted by engagement of the protrusions and the guide protrusions 2a of the rubber crawler.

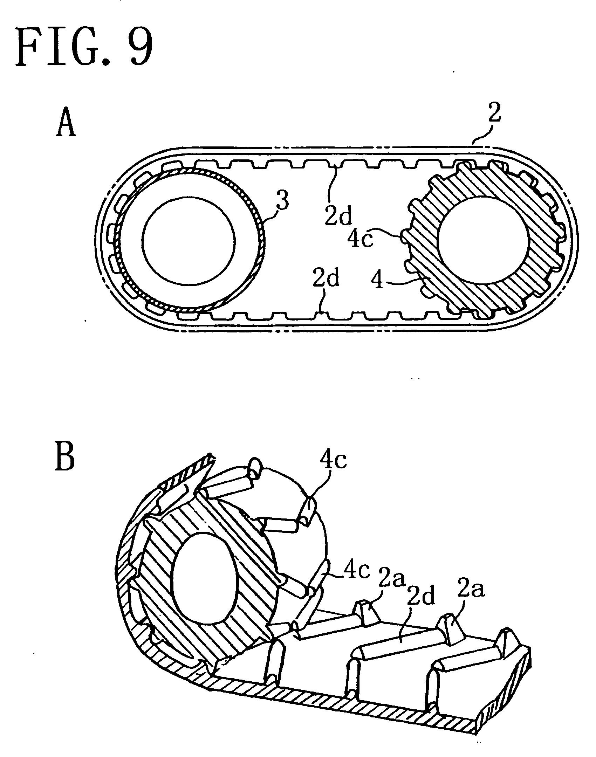

Figs. 9 respectively show different embodiments of a method for transmitting driving force of the traveling equipment of the present invention.

Fig. 9A is a side view for explaining the state that the rubber crawler 2 is suspendedly installed on the hollow tire 3 of coupled driving wheel and the solid tire 4 of driving tire.

In this embodiment, the driving tire 4 is provided with driving protrusions 4c on the outside circumference thereof to be made in gear shape. The rubber crawler 2 is similarly provided with driving small protrusions 2d between the guide protrusions 2a, 2a of the inside circumference thereof to be made irregular. The driving force is transmitted by a timing belt method wherein the driving protrusions 4c are engaged with the driving small protrusions 2d.

Besides, as shown in Fig. 9B, the driving protrusions 4c and the driving small protrusions 2d may be formed in V letter shape.

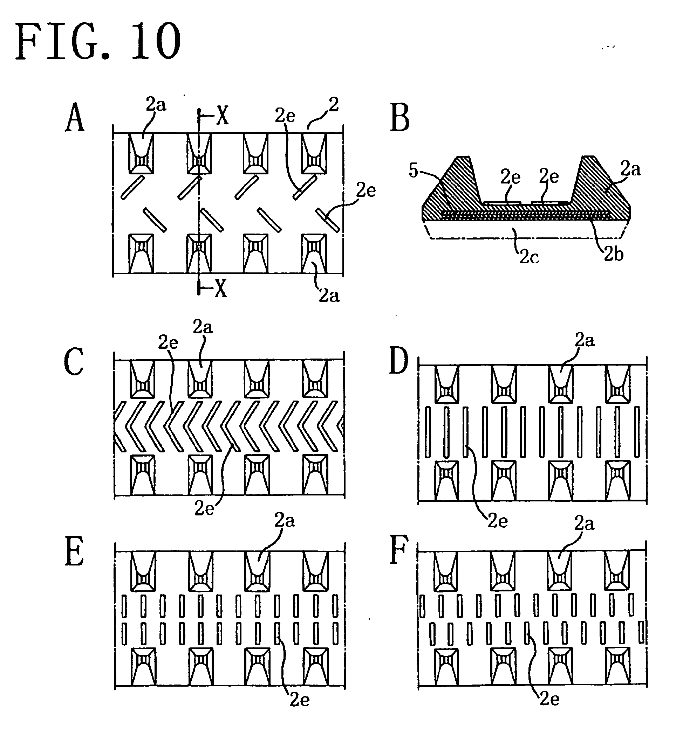

Figs. 10 respectively show different embodiments which small protrusions 2e are provided on the inside circumference of the rubber crawler, which do not show all features of the invention. Fig. 10A is a plane view of the inside circumference of the rubber crawler, and Fig. 10B is a section view taken on line X-X of Fig. 10A.

On the inside circumference of the rubber crawler 2 of this embodiment, the small protrusions 2e each in V letter shape are provided so as to be divided in right and left from the center of the cross direction and arranged in staggered shape. In this case, the driving force due to the friction between the driving tire and the inside circumference of the rubber crawler can be effectively transmitted.

Figs. 10C to 10F are plane views of the inside circumferences of the rubber crawlers showing different arrangements of the small protrusions 2e, respectively. In Fig. 10C, the small protrusions 2e are arranged in V letter shape. In Fig. 10D, linear small protrusions are arranged parallely in the cross direction of the rubber crawler. In Fig. 10E, the small protrusions 2e of Fig. 10D are divided in right and left from the center of the cross direction of the rubber crawler. In Fig. 10F, the small protrusions 2e of Fig. 10E are arranged in staggered shape in right and left.

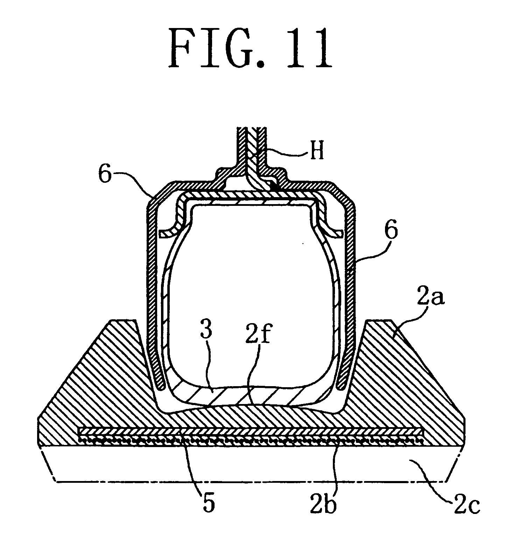

Fig. 11 is a section view of the cross direction of an embodiment wherein the inside circumference of the rubber crawler is formed in gentle curved shape partially with different tension.

According to this embodiment, the mud is effectively escaped. When the rubber crawler shifts from the center of the tire to either side thereof, the center of the rubber crawler is automatically modified to the center of the tire by the difference of tension so as to prevent it from getting out of the tire.

In case the small protrusions are provided on the inside circumference of the rubber crawler, they have the centers made high and gradually low towards the edges.

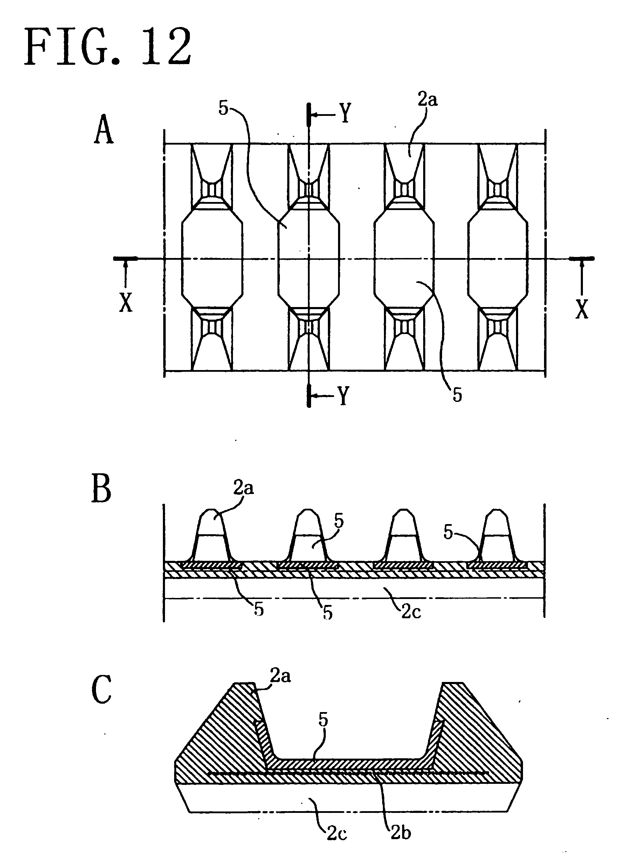

Figs. 12 show different embodiments that the core members 5 are embedded in the inside circumference of the rubber crawler, wherein a part of each core member 5 is exposed. Fig. 12A is a plane view of the inside circumference of the rubber crawler, Fig. 12B is a section view taken on line X-X of the Fig. 12A, and Fig. 12C, which does not show all features of the invention, is a section view taken on line Y-Y thereof.

When the core members 5 are embedded in the rubber, crawler so as to expose and to form in the same plane as the inside circumference of the rubber crawler as shown in Fig. 12, the inside circumference of the rubber crawler is prevented from wearing due to the friction with the tire.

When the core members 5 are embedded so as to expose only protrusively from the inside circumference of the rubber crawler, they can take the small protrusions' 2e place.

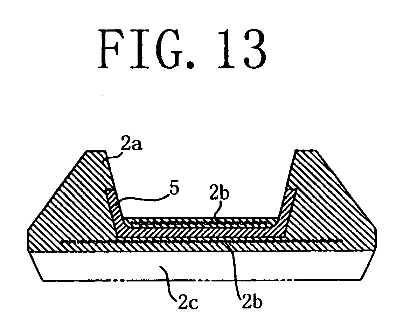

Besides, as shown in Fig. 13, which does not show all features of the invention, the core members 5 may be embedded so as to expose in only part of the guide protrusions 2a.

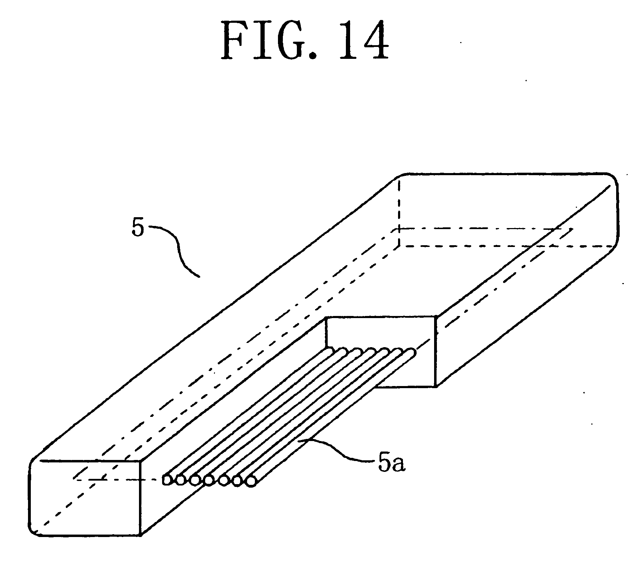

Fig. 14 is a perspective view with parts broken away showing another embodiment regarding the core members 5 to be embedded in the rubber crawler.

A strength layer 5a made of steel cords is embedded in the core member 5 as a strength member in this embodiment. The strength layer 5a is so formed that a plurality of steel cords are arranged in a row and paralleled along the longitudinal direction of the core member horizontally.

Although the core member 5 in Fig. 14 is an example of a single strength layer 5a, a plurality of strength layers 5a may be embedded. In this case, the strength members may be bias to the longitudinal direction of the core member. In case of a plurality of layers, each layer may be different in the quality of the material and the array direction.

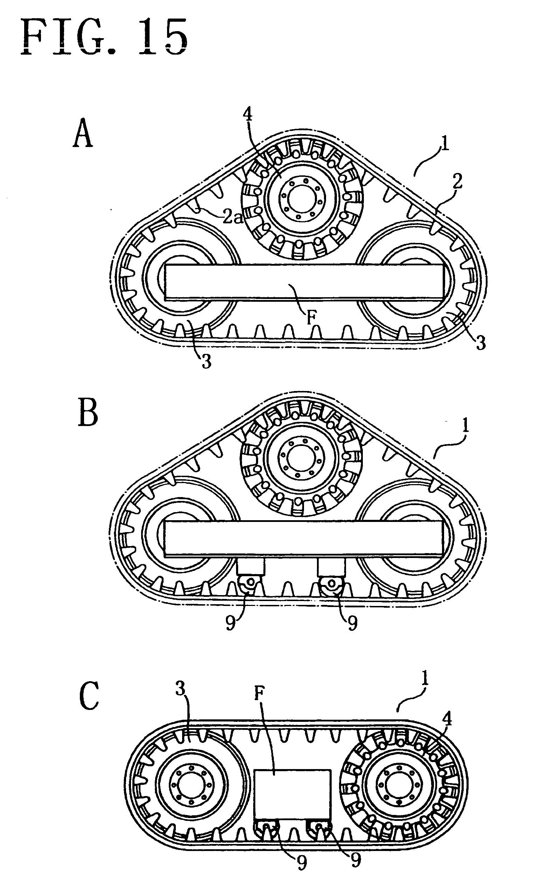

Figs. 15 are respectively side views showing different embodiments regarding the crawler driving equipment with the rubber crawler of the present invention.

In the crawler driving equipment 1 of this embodiment, the driving wheel 4 is arranged to the upside, and the coupled driving wheels 3, 3 are arranged to both ends of the tread. As shown in Fig. 15B, carrying wheels 9 may be arranged between the coupled driving wheels 3, 3. Besides, as shown in Fig. 15C, the carrying wheels 9 may be arranged between the coupled driving wheel 3 and the driving wheel 4 of the crawler driving equipment in the first embodiment.

Besides, the crawler driving equipment for installing the rubber crawler 2 of the present invention may be provided with a conventional crawler extension adjusting system (for example, which moves a coupled driving wheel due to grease up in a longitudinal driving direction of rubber crawler) on its frame F.

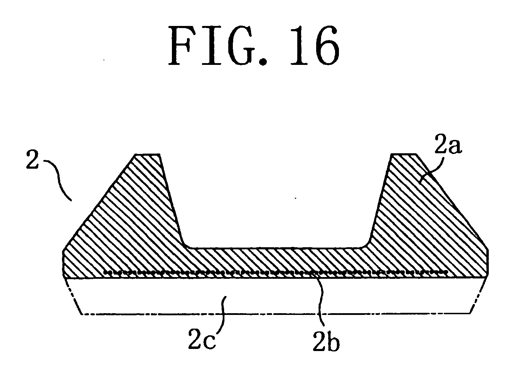

Fig. 16 is a section view of a cross direction of a rubber crawler showing an embodiment, which does not comprise all features of the invention, wherein no core members or metallic core members are embedded therein.

Although it is preferable that the core members are embedded in the rubber crawler to be used in the driving equipment of the present invention like this embodiment, they are not necessarily need. Besides, in addition to this embodiment, core members made of high hardness rubber or metal such as iron can be also used.

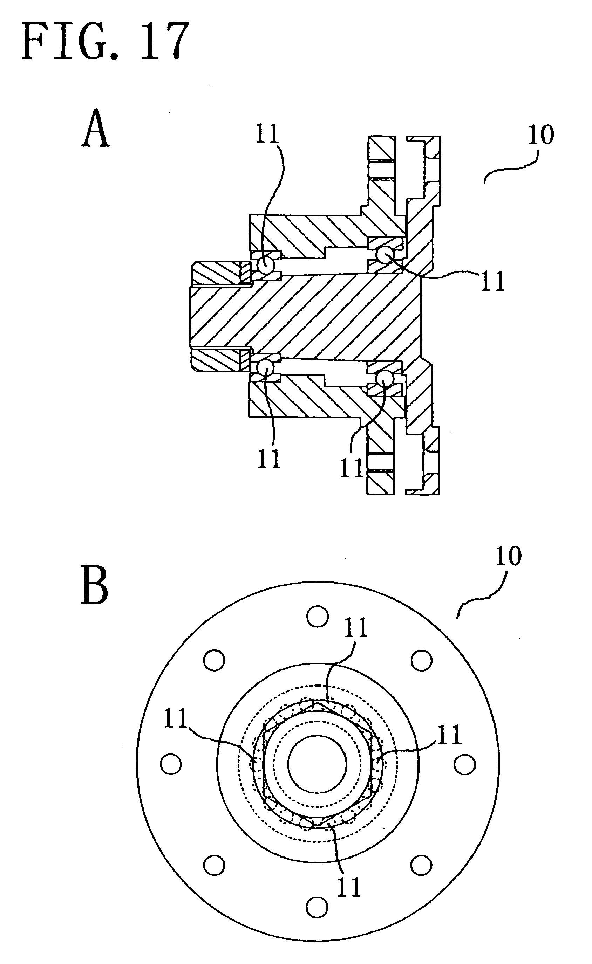

Figs. 17 show a bearing device 10 to be fitted and used between the axle S and the wheel H of the crawler driving equipment, and Fig. 17A is a section view of the side surface and Fig. 17B is a front view.

Some conventional skid steering driving equipments (see Fig. 19) are formed in all wheel drive. And therein, the axles S arranged to the longitudinal direction of each driving equipment provided to the right and left of the vehicle are connected through a chain for transmitting driving force from an engine to the axles S to rotate synchronously.

When the rubber crawler is suspendedly installed on the driving equipment whose front and rear axles S synchronously rotate, there is no problem in case the outside diameter dimensions of the front and rear tires of the driving equipment are same. However, in case the outside diameter dimensions are different, peripheral speeds of these tires are different. As the result, winding speeds are different in the front tires and the rear tires on which the rubber crawler is wound, thereby loading to either of the rubber crawler or driving faction of the driving equipment, or to both of them. Therefore, in the worst case, either of the crawler or the driving equipment, or both of them are to be damaged.

The bearing device 10 of this embodiment is used to solve such a problem. The mechanism is so formed that the tires (wheels) can freely rotate regardless of the rotations of the axles S, which interrupt transmission of rotations of the bearings 11 in the bearing device 10 to the tires (wheels). Hence, the above-mentioned problem can be solved by the bearing device, thereby enabling the rubber crawler to be suspendedly installed on the driving equipment according to all wheel drive.

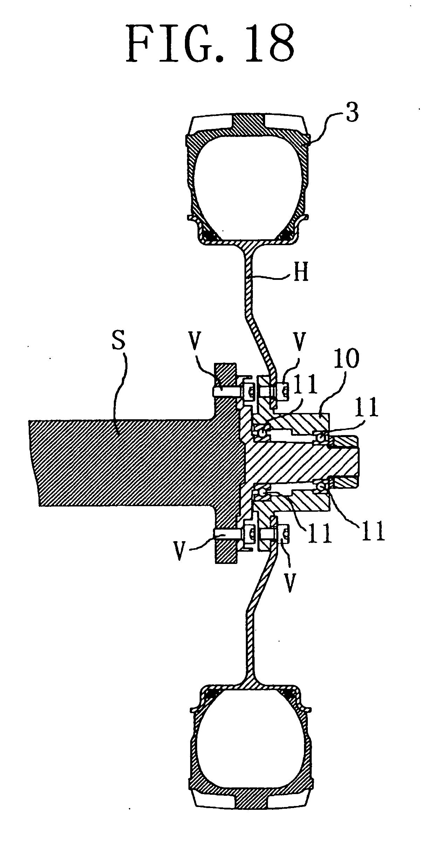

For a reference, in Fig. 18 is shown a section view showing the state that the coupled driving wheel 3 is fitted on the axle S of the driving equipment.

### UTILITY POSSIBILITY IN INDUSTRY

Since a rubber crawler is so constructed that core members made of thermoplastics, thermosetting plastics, urethane resins, hard rubber with high hardness, blend material or bridging material composed of these plastics and rubber, or high hardness rubber elastic body are embedded at a fixed interval, the total weight of core members are reduced than the conventional metallic core members, the rubber crawler can be lightened, and besides, the rigidity of the rubber crawler is kept.

Since the core members are made of plastic material, they can be integrally fused and bound with rubber elastic material or resin material of an endless belt for forming a rubber crawler main body.

Since the inside circumference of the rubber crawler is convexly curved so that the center of the cross direction is high and both ends thereof are gradually low from the center, mud drains away well. Therefore, the mud is prevented from gathering between the crawler and the tires, and the crawler is prevented from getting out of the tire. Besides, since abnormal tension isn't caused to the crawler by mud clog, the crawler is prevented from cutting off. When the crawler is shifted from the tire, it is put back to the center by the shape, thereby enabling the crawler to adjust side shifts and preventing the crawler from getting off.

Driving equipments according to a tire specification comprising more than two tires are arranged to right and left sides of a vehicle, a rubber crawler is suspended to the longitudinal both end tires of each driving equipment, and at least one side tires are made in hollow tire adjustably enlarging and reducing the outside diameter dimension, and therefore, a driving equipment can serve as both a driving equipment according to a tire specification and a driving equipment according to a crawler specification, and manufacture costs can be reduced. Besides, the tires and the crawler are suitably selected in accordance with condition of the traveling place. When an industrial vehicle needs to travel on damp ground, soft ground and snow, the crawler with the rubber crawler is used. When the rubber crawler is unnecessary, the crawler travels with the tires without the rubber crawler.

The crawler is easily attached and detached. Besides, the traveling equipment is formed in a skid steering driving equipment for adjusting the extension of the rubber crawler due to inner pressure of the hollow tire.

Since hard covers or sideboards made of metal or hard plastic are fitted on the side surfaces of a tire, air tires or solid tires are prevented from running aground on the guide protrusions of the crawler. Therefore, the rubber crawler is prevented the wheels from getting out, and the side surfaces of the tire is prevented from being damaged by friction with the guide protrusions.

Since the rubber crawler having the core members embedded at a fixed interval is installed on the traveling equipment which at least either of front and rear tires in both ends of the longitudinal direction are made in hollow tire, a rubber crawler traveling equipment excellent in traveling ability can be provided.

## Claims

1. A rubber crawler (2), comprising an endless rubber belt made of rubber elastic material and resin material;
a tensile strength layer (2b) embedded in the endless rubber belt and comprising a plurality of tensile strength bodies arranged and paralleled in rows within the cross direction of the crawler (2) along the circumferential direction thereof; and
guide protrusions (2a) preventing the crawler from getting out of tires (3, 4) of a traveling apparatus, the guide protrusions (2a) being protrusively formed in an angular U letter shape along the circumferential direction so as to contact opposite sides of the tire (3, 4),
**characterized in that**
an inside circumference (2f) of the rubber crawler (2) in cross direction is so formed that the central part of the cross direction of the crawler is high and both edges of the cross direction is gradually low from the central part.

2. A rubber crawler (2) according to claim 1,
**characterized in that**
core members (5) made of thermoplastics, thermosetting plastics, urethane resins, blend material or bridging material composed of these plastics and rubber, or high hardness rubber, are embedded in the rubber crawler at a fixed interval, and
strength bodies (5a) are embedded in said core members (5).

3. A rubber crawler traveling equipment, comprising:
a traveling mechanism arranged to right and left of a vehicle,
said each traveling mechanism having at least two tires (3, 4), including a front tire and a rear tire with respect to a longitudinal direction of the traveling mechanism; and
a rubber crawler (2) according to claim 1 or claim 2, wherein a bearing device (10) for interrupting transmission of rotation of bearings (11) to the tires (3, 4) is provided and the rubber crawler (2) is suspended on the traveling mechanism.

## Patentansprüche

1. Gummi-Raupenkette (2), enthaltend einen Endlosgummiriemen, der aus elastischem Gummimaterial und Harzmaterial besteht;
eine zugfeste Schicht (2b), die in den Endlosgummiriemen eingebettet ist und eine Mehrzahl an zugfesten Körpern enthält, die innerhalb der Querrichtung der Raupenkette (2) entlang deren Umfangsrichtung in Reihen parallel angeordnet sind; und
Führungsvorsprünge (2a), die verhindern, dass sich die Raupenkette von den Reifen (3, 4) einer Fahrvorrichtung löst, wobei die Führungsvorsprünge (2a) entlang der Umfangsrichtung vorstehend in eine abgewinkelte U-Form geformt sind, so dass sie gegenüberliegende Seiten des Reifens (3, 4) berühren,
**dadurch gekennzeichnet, dass**
ein Innenumfang (2f) der Gummi-Raupenkette (2) in der Querrichtung so geformt ist, dass der zentrale Teil der Querrichtung der Raupenkette hoch ist und beide Ränder der Querrichtung graduell niedrig vom zentralen Teil sind.

2. Gummi-Raupenkette (2) nach Anspruch 1,
**dadurch gekennzeichnet, dass**
Kernelemente (5) aus Thermoplasten, Duroplasten, Urethanharzen, Mischmaterial oder Bridging Material, das aus diesen Kunststoffen und Gummi, oder hochhartem Gummi, zusammengesetzt ist, in einem festen Abstand in die Gummi-Raupenkette eingebettet sind, und Festigkeitskörper (5a) in die Kernelemente (5) eingebettet sind.

3. Gummi-Raupenkettenfahranlage, enthaltend:
einen Fahrmechanismus, der rechts und links eines Fahrzeugs angeordnet ist,
wobei der Fahrmechanismus zumindest zwei Reifen (3, 4) aufweist, darunter einen Vorderreifen und einen Hinterreifen bezüglich einer Längsrichtung des Fahrmechanismus; und
eine Gummi-Raupenkette (2) nach Anspruch 1 oder Anspruch 2, worin eine Lagervorrichtung (10) zum Unterbrechen der Übertragung der Drehung von Lagern (11) auf die Reifen (3, 4) vorgesehen ist, und die Gummi-Raupenkette (2) auf dem Fahrmechanismus aufgehängt ist.

## Revendications

1. Chenille en caoutchouc (2), comprenant une courroie sans fin en caoutchouc réalisée en un matériau élastique en caoutchouc et en matériau de résine;
une couche de résistance à la traction (2b) noyée dans la courroie sans fin en caoutchouc et comprenant plusieurs corps de résistance à la traction agencés parallèlement en rangées dans la direction transversale de la chenille (2) dans sa direction circonférentielle; et
des saillies de guidage (2a) empêchant que la chenille sorte des bandages (3, 4) d'un appareil de déplacement, les saillies de guidage (2a) étant formées d'une manière saillante en forme de lettre angulaire U dans la direction circonférentielle de manière à venir en contact avec des côtés opposés du bandage (3, 4),
**caractérisée en ce que**
une circonférence intérieure (2f) de la chenille en caoutchouc (2) dans la direction transversale est formée de telle sorte que la partie centrale de la direction transversale de la chenille est élevée et que les deux bords de la direction transversale diminuent progressivement depuis la partie centrale.

2. Chenille en caoutchouc (2) selon la revendication 1, **caractérisée en ce que** les éléments de noyau (5) réalisés en des matériaux thermoplastiques, thermodurcissables, résines d'uréthane, matériau de mélange ou matériau de pontage constitué de ces plastiques et de caoutchouc, ou de caoutchouc d'une dureté élevée, sont noyés dans la chenille en caoutchouc à un intervalle fixe, et
des corps de résistance (5a) sont noyés dans lesdits éléments de noyau (5).

3. Equipement de déplacement pour chenille en caoutchouc, comprenant:
un mécanisme de déplacement agencé à droite et à gauche d'un véhicule,
chaque mécanisme de déplacement précité ayant au moins deux bandages (3, 4), incluant un bandage avant et un bandage arrière par rapport à une direction longitudinale du mécanisme de déplacement; et
une chenille en caoutchouc (2) selon la revendication 1 ou la revendication 2, où un dispositif de palier (10) pour interrompre la transmission de rotation des paliers (11) aux bandages (3, 4) est réalisé, et la chenille en caoutchouc (2) est suspendue sur le mécanisme de déplacement.
